# FASCICULE DE BREVET EUROPEEN

(11) **EP 3 259 083 B1**
(45) Date de publication et mention de la délivrance du brevet: **03.04.2019**
(21) Numéro de dépôt: 16707886.4
(22) Date de dépôt: 09.02.2016
(51) Int. Cl.: B21K 3/04, B21D 53/78, B23P 15/04, F01D 5/28, B21J 13/02

(54) **PROCEDE DE FORGEAGE A HAUTE TEMPERATURE D'UNE PIECE METALLIQUE PREFORMEE ET OUTILLAGE DE FORME APTE AU FORGEAGE**
VERFAHREN ZUM HOCHTEMPERATURSCHMIEDEN EINES VORGEFORMTEN METALLTEILS UND ZUM SCHMIEDEN GEEIGNETE FORMGEBUNGSAUSRÜSTUNG
METHOD FOR HIGH TEMPERATURE FORGING OF A PREFORMED METAL PART, AND SHAPING EQUIPMENT SUITABLE FOR FORGING

(30) Priorité: 19.02.2015 FR 1551403
(43) Date de publication de la demande: 27.12.2017
(73) Titulaire: Safran Aircraft Engines, 75015 Paris (FR)
(72) Inventeur: THAM, Léon, 77550 Moissy-Cramayel Cedex (FR); KHOUS, Mohamed Walid, 77550 Moissy-Cramayel Cedex (FR)
(74) Mandataire: David, Alain
(86) Numéro de dépôt international: PCT/FR2016/050283
(87) Numéro de publication internationale: WO 2016/132044

(56) Documents cités:
- WO-A1-2011/161385
- WO-A2-2012/042164
- US-A1- 2009 165 299

## Description

### Arrière-plan de l'invention

Le domaine de l'invention est celui des turbomachines, notamment celui des aubes de soufflante, en matériau composite, de turbomachines dont le bord d'attaque comporte un renfort structurel métallique et la présente invention concerne plus particulièrement un procédé de forgeage à haute température de pièces métalliques telles que par exemple un renfort structurel métallique de bord d'attaque d'aube composite de turbomachine.

Toutefois, l'invention est aussi bien applicable à la réalisation de toutes pièces de forme géométrique complexe et à la réalisation de renforts métalliques destinés à renforcer un bord d'attaque ou un bord de fuite d'aube de tout type de turbomachine, terrestre ou aéronautique, et notamment un turbomoteur d'hélicoptère ou un turboréacteur d'avion.

Il est connu d'équiper les aubes de soufflante de turbomachine, réalisées en matériaux composites, d'un renfort structurel métallique s'étendant sur toute la hauteur de l'aube et au-delà de leur bord d'attaque comme mentionné dans le document EP1908919 déposé au nom de la demanderesse. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délaminage, de rupture de fibre ou encore d'endommagement par décohésion fibre/matrice. De façon connue, il est réalisé soit entièrement par fraisage à partir d'un bloc de titane, ce qui nécessite de nombreuses opérations de reprises et des outillages complexes impliquant des coûts de réalisation importants soit à partir d'une préforme obtenue à partir d'un simple barreau métallique et d'une succession d'étapes de forge, comme décrit notamment dans la demande de brevet FR2961866 déposée au nom de la demanderesse.

Les dernières étapes de forge sont toutefois particulièrement complexes de par la cinématique tridimensionnelle des déformations demandées. C'est pourquoi la demanderesse a développé dans sa demande de brevet FR2965496 un outillage pour la mise en forme à chaud dit «multi-effets» qui permet de réaliser une déformation de façon tridimensionnelle (i.e. selon différentes directions de façon simultanée) au moyen d'une presse simple effet (donc avec un seul axe de travail) peu onéreuse et dans des conditions de hautes températures, c'est-à-dire au-delà de 850°C (de l'ordre de 940°C pour la réalisation d'un renfort en titane).

Si ce procédé donne globalement satisfaction par sa rapidité et sa simplicité, il présente toutefois encore certains inconvénients en fin d'opération du fait des contre-dépouilles angulaires de vrillage existant tout au long de la pièce à réaliser qui nécessitent d'effectuer des mouvements de déchaussement dans plusieurs directions, source de défauts sur cette pièce.

### Objet et résumé de l'invention

La présente invention a donc pour but principal de pallier de tels inconvénients en proposant un procédé de forgeage d'une pièce métallique préformée comportant des contre-dépouilles angulaires de vrillage dans sa forme finale, procédé comportant les étapes suivantes :
- mise en place de ladite pièce métallique préformée sur un insert central mobile dudit outillage comportant au moins deux zones de tronçonnage pour supprimer lesdites contre-dépouilles angulaires de vrillage,
- blocage de ladite pièce métallique préformée dans ledit outillage,
- conformage d'ailettes latérales de ladite pièce métallique préformée dans sa forme finale par le déplacement relatif selon une direction commune d'une première matrice et dudit insert central mobile vers une seconde matrice,
- déchaussement de ladite pièce métallique préformée en forme finale selon une direction d'extraction unique.

Ainsi, avec un tel déchaussement effectué dans une seule direction, tout risque de déformation de la pièce, constaté avec l'outillage de l'art antérieur, est évité.

De préférence, ladite pièce métallique comporte un tourillon à chacune de ses deux extrémités et ledit blocage de ladite pièce métallique dans ledit outillage est obtenu par encastrement de l'un desdits deux tourillons et par pivotement de l'autre desdits deux tourillons.

Avantageusement, le déplacement dudit insert central mobile est guidé par le déplacement de ladite première matrice et ladite direction unique d'extraction est perpendiculaire à ladite direction commune de déplacement.

De préférence, ladite au moins deux zones de tronçonnage comporte au moins deux parties tronquées réalisées aux deux extrémités dudit insert central mobile.

Avantageusement, ladite première matrice est une matrice inférieure fixe et ladite seconde matrice est une matrice supérieure mobile.

L'invention concerne également un outillage de forme apte au forgeage à haute température d'une pièce métallique préformée obtenue selon le procédé de forgeage précité.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 est une vue en coupe du bord d'attaque d'une aube de soufflante en matériau composite montrant son renfort structurel métallique ;
- la figure 2 est une vue en perspective de la pièce métallique préformée servant à réaliser le renfort structurel métallique de la figure 1 avant la mise en oeuvre du procédé de forgeage selon l'invention ;
- les figures 3A à 3F illustrent les positions correspondantes de l'outillage de forme servant à la mise en oeuvre du procédé de forgeage selon l'invention ;
- la figure 4 montre la pièce métallique préformée en place sur son insert tronqué ainsi que son maintien en position dans l'outillage de forme; et
- les figures 5A et 5B sont des perspectives partielles avant et après tronçonnage d'une partie d'extrémité d'un insert tronqué.

### Description détaillée d'un mode de réalisation

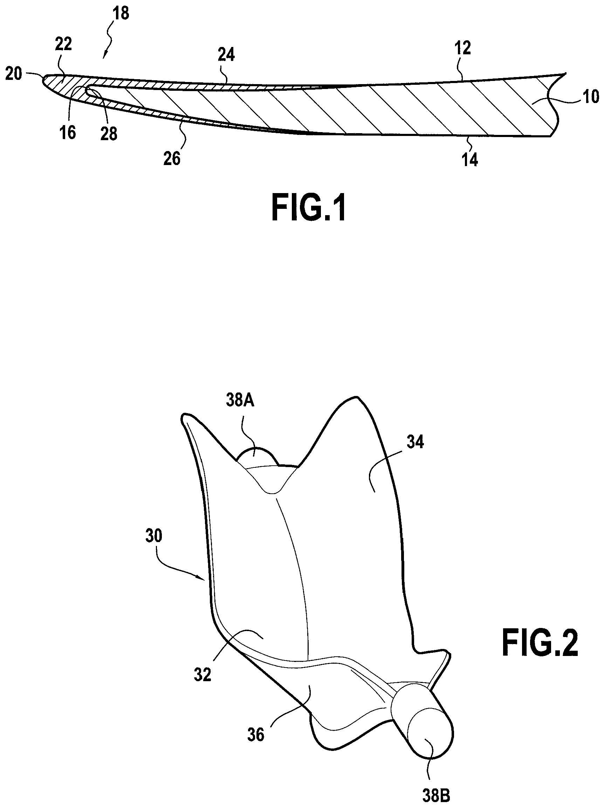

La figure 1 est une vue en coupe partielle d'une aube composite comportant un renfort structurel métallique de bord d'attaque obtenu au moyen du procédé de forgeage selon l'invention.

L'aube 10 illustrée est par exemple une aube mobile de soufflante d'une turbomachine (non représentée) s'étendant entre un bord d'attaque et un bord de fuite depuis un pied d'aube et jusqu'à un sommet de cette aube et obtenue typiquement par drapage (remplissage collage) d'un matériau composite tissé. A titre d'exemple, le matériau composite utilisé peut être composé par un assemblage de fibres tissées de carbone et d'une matrice résineuse, l'ensemble étant formé par moulage au moyen d'un procédé classique d'injection de résine sous vide de type RTM (pour «Resin Transfer Molding»).

Une surface intrados 12 et une surface extrados 14 forment les faces latérales de l'aube 10 qui relient le bord d'attaque 16 au bord de fuite (non représenté) de l'aube 10. Comme il est connu, l'aube 10 comporte un renfort structurel métallique 18, préférentiellement à base titane (pour sa grande capacité d'absorption de l'énergie due aux chocs), collé au niveau de son bord d'attaque 16 dont il épouse la forme et qu'il prolonge pour former un bord d'attaque 20, dit bord d'attaque du renfort. Le renfort structurel métallique est collé sur l'aube 10 au moyen d'une colle connue de l'homme du métier, comme par exemple une colle cyano-acrylique ou encore époxy.

De façon classique, le renfort structurel métallique 18 est une pièce monobloc comportant une section sensiblement en forme de V présentant une base 22 formant le bord d'attaque 20 et prolongée par deux flancs latéraux 24 et 26 épousant respectivement l'intrados 12 et extrados 14 de l'aube 10. Les flancs 24, 26 présentent un profil effilé ou aminci en direction du bord de fuite de l'aube. La base 22 comporte un profil interne 28 arrondi apte à épouser la forme arrondie du bord d'attaque 16 de l'aube 10.

Le procédé de forgeage selon l'invention permet de finaliser la réalisation d'un renfort structurel métallique tel qu'illustré à la figure 1 (le renfort étant illustré dans son état final monté sur une aube 10 mobile de soufflante de turbomachine), à partir d'une pièce métallique préformée 30 telle que l'illustre la perspective de la figure 2.

La pièce métallique préformée 30 est obtenue, comme il est connu des premières étapes du procédé de la demande FR2961866 précitée, à partir d'un barreau métallique de section circulaire, dont le diamètre et la longueur sont fonction de l'aube souhaitée. Ce barreau est tout d'abord déformé selon deux directions pour obtenir une double cambrure, au moyen d'une presse isotherme à une température comprise entre 700°C et 940°C (dans le cas d'un barreau de titane). Puis, le barreau ainsi vrillé est l'objet d'un bourrage sous presse, au moyen d'une presse hydraulique ou à vis à une température de l'ordre de 940°C, avant d'être mis en forme par filage inverse au moyen d'un poinçon (ou plusieurs selon notamment la quantité de matière à filer) dont la forme en V correspond à la forme finale interne du profil interne 28 de la base 22 du renfort métallique 18, c'est-à-dire la forme arrondie complémentaire de celle du bord d'attaque 16 de l'aube 10.

A l'issue de ces étapes préalables au procédé de forgeage de l'invention, la pièce métallique préformée 30 est une pièce intermédiaire de fabrication sensiblement en forme de V (ou plus exactement de Y) comportant deux ailettes latérales 32, 34 ayant un angle d'ouverture compris entre 60° et 90° et s'étendant depuis un nez plein 36 correspondant sensiblement à la forme finale de la base 22 du renfort structurel métallique 18. Les épaisseurs des ailettes latérales ont un profil s'amincissant en s'éloignant du nez pour correspondre avec les faces intrados et extrados de l'aube.

Aux deux extrémités de cette pièce 30, des tourillons 38A, 38B résultant du barreau métallique initial permettent de faciliter la manipulation de la pièce.

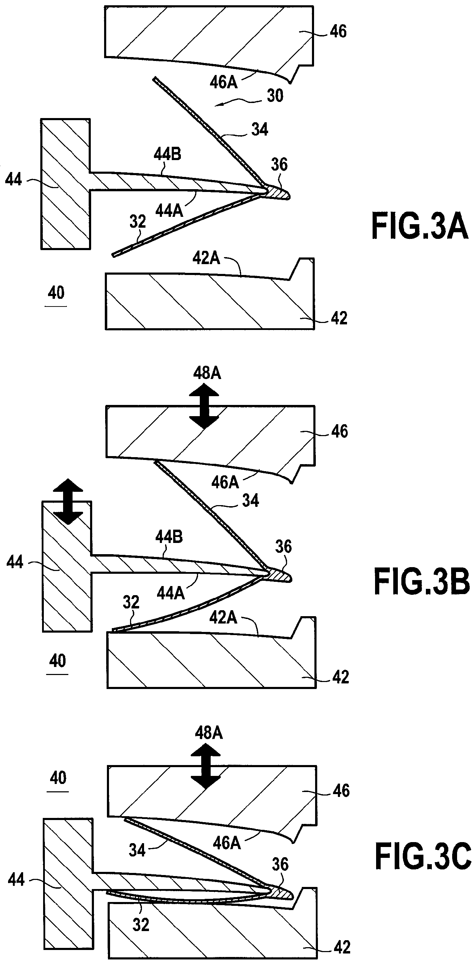

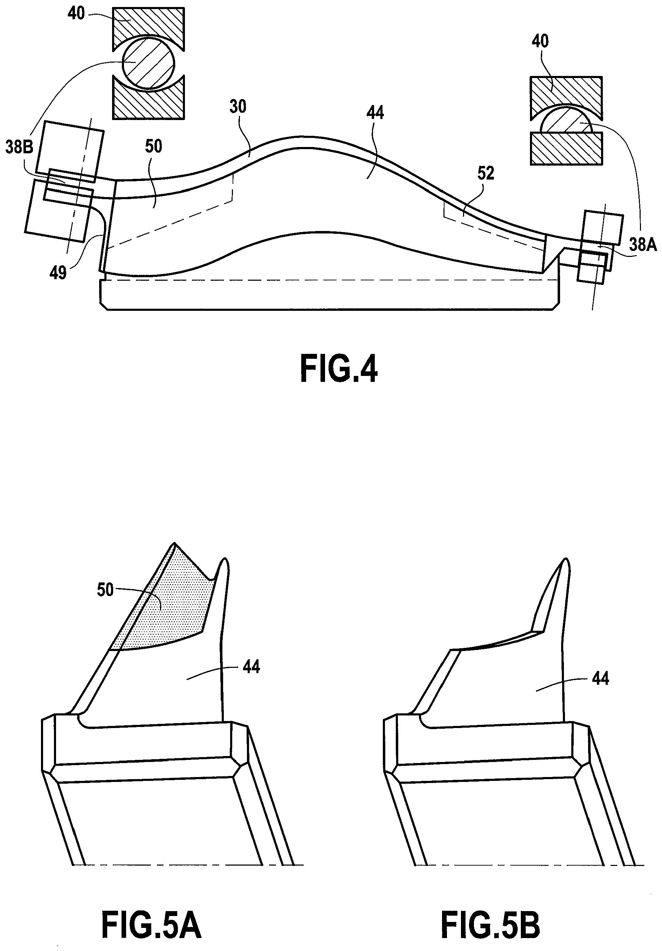

Les figures 3A à 3F illustrent les différentes étapes de réalisation par forgeage du renfort structurel métallique 18 depuis la pièce métallique préformée 30 issue des étapes précitées au moyen d'un outillage de forme apte au forgeage à haute température de cette pièce. Cet outillage a pour objet de rapprocher les ailettes latérales 32, 34 et donc de réduire l'angle d'ouverture de façon à obtenir la forme finale recherchée. Il met en oeuvre dans une enceinte fermée 40 (voir la figure 4) et à une température comprise entre 750 et 850°C, une première matrice 42, un insert central mobile 44 et une seconde matrice 46. La première matrice est avantageusement une matrice inférieure fixe et la seconde matrice une matrice supérieure mobile sans que cette disposition soit limitative, l'important étant l'obtention d'un mouvement relatif d'approche des première et seconde matrices par rapport à l'insert central.

Comme le montre la figure 3A, dans la première étape du procédé de l'invention, l'insert central mobile 44 étant disposé dans une première position dite haute, la pièce métallique préformée 30 est tout d'abord mis en place sur cet insert jusqu'à venir en contact avec la partie interne du nez 36 et elle est alors bloquée aux extrémités par exemple au moyen d'une liaison comportant par rapport au bâti (enceinte 40) de l'outillage de forme un encastrement du premier tourillon d'une part, par exemple le tourillon 38A de bas de pale, et un pivotement du second tourillon, le tourillon 38B de haut de pale d'autre part, afin d'assurer une coaxialité des tourillons tout en permettant un isostatisme de positionnement.

La figure 3B illustre l'étape suivante du procédé dans laquelle l'insert central mobile 44 et la matrice supérieure mobile 46 sont déplacés, simultanément ou non, vers la matrice inférieure fixe 42 selon une direction de déplacement 48A (verticale sur le dessin) pour engager le conformage de la première ailette latérale 32 en refermant peu à peu, par le rapprochement de cet insert avec la matrice inférieure, l'angle d'ouverture de cette première ailette latérale. Lorsque le déplacement est simultané, le déplacement de l'insert est avantageusement guidé par le déplacement de la matrice supérieure mobile.

Dans l'étape suivante de la figure 3C, le déplacement de l'insert central mobile 44 est arrêté dans une position dite intermédiaire permettant un conformage partiel de la première ailette latérale 32 prise entre cet insert et la matrice inférieure fixe 42. Simultanément, le déplacement de la matrice supérieure mobile 46, se poursuit ou débute selon que respectivement ce déplacement a déjà commencé ou non, pour engager le conformage de la seconde ailette latérale 34 en refermant peu à peu, par le rapprochement cette fois de cette matrice supérieure avec l'insert, l'angle d'ouverture de cette seconde ailette latérale. L'objectif de ce conformage partiel étant d'éviter une déformation résiduelle et la ruine de l'outil, le degré de fermeture choisi dépendra de différents paramètres dont la température de formage, les caractéristiques des matériaux formant l'outil et de la pièce.

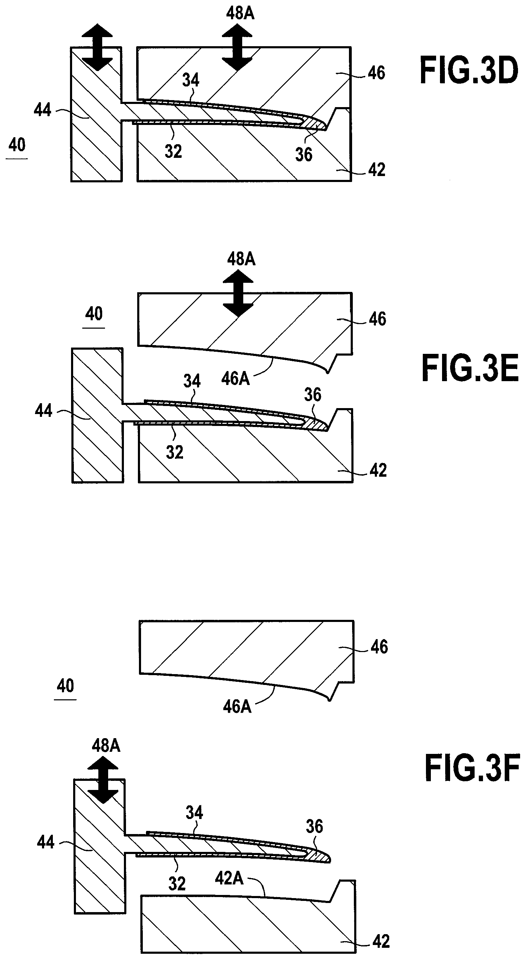

Dans l'étape suivante de la figure 3D, le déplacement de l'insert central mobile 44 reprend dans la direction 48A vers une position finale dite basse pour, accompagné par la poursuite du déplacement de la matrice supérieure mobile 46 dans cette même direction, procéder au conformage (non plus partiel mais total) simultanée des première et seconde ailettes latérales 32,34 qui vont alors épouser parfaitement le contour interne de l'outillage de forme. Pour ce faire, les faces en regard de l'insert central mobile 44A et de la matrice inférieure 42A sont bien entendu conformées pour laisser entres elles le seul espace nécessaire pour recevoir la première ailette latérale 32 de la pièce métallique préformée dans sa forme finale, c'est à dire alignée avec le nez 36. De même, la paroi supérieure 44B de l'insert central mobile et la paroi inférieure 46A de la matrice supérieure mobile présentent des faces en regard conformées pour laisser entres elles le seul espace nécessaire à la formation de la seconde ailette latérale 34 de la pièce métallique préformée dans sa forme finale. Dans cette position de conformage total, on notera que l'on maintient l'outillage fermé sur la pièce pendant quelques minutes pour éviter tout risque de retour élastique de la pièce.

A l'issue de ces étapes de forgeage, la pièce métallique préformée 30 présente la forme finale en Y du renfort structurel métallique 18 avec ses deux flancs latéraux 24, 26 s'étendant depuis sa base 22 et ayant son angle d'ouverture final requis par les spécifications techniques. Il ne restera alors plus qu'à procéder au déplacement successif de la matrice supérieure mobile 46 (figure 3E) puis de l'insert central mobile 44 (figure 3F) dans la direction commune de déplacement 48A (mais en sens opposé à leurs précédents déplacements) pour permettre l'extraction (préférentiellement à chaud) de ce renfort structurel métallique, cette extraction s'effectuant dans une direction perpendiculaire à cette direction commune.

Toutefois, compte tenu de la présence des contre-dépouilles angulaires de vrillage (voir par exemple la référence 49 sur la figure 4) qui risque d'entrainer des déformations non souhaitées des ailettes latérales, cette extraction sera avantageusement facilitée en tronquant l'insert sur une ou plusieurs parties particulières de façon à supprimer ces contre-dépouilles angulaires de vrillage existant tout au long de la pièce. Selon le plan de frappe, différentes zones de tronçonnage peuvent être privilégiées. Ainsi, l'insert central 44, illustré à la figure 4 avec la pièce 30 le recouvrant, comporte au moins deux zones de tronçonnage 50, 52 à ses deux extrémités. La partie tronquée 50 pour s'affranchir de la contre-dépouille 49 apparait plus précisément à la figure 5A alors que la figure 5B montre l'insert central dans sa forme finale dépourvue de cette partie manquante.

Avec cette configuration d'insert tronqué, le retrait à chaud de la pièce de l'insert central est grandement facilité car il n'est plus nécessaire d'effectuer des légers mouvements de déchaussement pour extraire la pièce en essayant de suivre son profil tridimensionnel mais simplement en pratiquant ce déchaussement dans une seule direction d'extraction.

Enfin, pour obtenir le renfort structurel métallique prêt à l'emploi, il ne restera plus qu'à couper les tourillons 38A, 38B aux deux extrémités de cette pièce et si nécessaire procéder à un ou plusieurs usinages de finition. De même et selon son utilisation, un dépôt d'une couche de protection en Nitrure de bore sur l'insert central mobile pourra être réalisé préalablement pour obtenir un meilleure glissement et une fois extrait un polissage du renfort structurel métallique pourra aussi être réalisé pour obtenir un meilleure rendu.

On notera que si le procédé selon l'invention a été décrit principalement pour un renfort structurel métallique à base titane, il est bien entendu également applicable avec des matériaux à base nickel ou encore à base acier à des températures adaptées aux alliages précités.

On notera également que si l'invention a été plus particulièrement décrite en rapport avec le forgeage d'un renfort métallique d'une aube composite de turbomachine, il est clair qu'il pourrait également concerner un renfort métallique d'une aube métallique de turbomachine. De même, si l'invention a été plus particulièrement décrite en rapport avec un renfort métallique d'un bord d'attaque d'aube de turbomachine, il est aussi applicable pour la réalisation d'un renfort métallique d'un bord de fuite d'une aube de turbomachine.

## Revendications

1. Procédé de forgeage mettant en oeuvre un outillage de forme apte au forgeage à haute température d'une pièce métallique préformée (30) comportant des contre-dépouilles angulaires de vrillage (49) dans sa forme finale, le procédé comportant les étapes suivantes :
- mise en place de ladite pièce métallique préformée sur un insert central mobile (44) dudit outillage comportant au moins deux zones de tronçonnage pour supprimer lesdites contre-dépouilles angulaires de vrillage,
- blocage de ladite pièce métallique préformée dans ledit outillage,
- conformage d'ailettes latérales (32, 34) de ladite pièce métallique préformée dans sa forme finale par le déplacement relatif selon une direction commune (48A) d'une première matrice (46) et dudit insert central mobile vers une seconde matrice (42),
- déchaussement de ladite pièce métallique préformée en forme finale selon une direction d'extraction unique.

2. Procédé de forgeage selon la revendication 1, **caractérisé en ce que** ladite au moins deux zones de tronçonnage comporte deux parties tronquées (50, 52) réalisées à deux extrémités dudit insert central mobile.

3. Procédé de forgeage selon la revendication 1, **caractérisé en ce que** le déplacement dudit insert central mobile est guidé par le déplacement de ladite première matrice.

4. Procédé de forgeage selon la revendication 1, **caractérisé en ce que** ladite direction unique d'extraction est perpendiculaire à ladite direction commune de déplacement.

5. Procédé de forgeage selon la revendication 1, **caractérisé en ce que** ladite pièce métallique préformée comporte un tourillon (38A, 38B) à chacune de ses deux extrémités et ledit blocage de ladite pièce métallique préformée dans ledit outillage est obtenu par encastrement de l'un desdits deux tourillons et par pivotement de l'autre desdits deux tourillons.

6. Outillage de forme apte au forgeage à haute température dans une enceinte (40) d'une pièce métallique préformée (30) comportant des contre-dépouilles angulaires de vrillage (49) dans sa forme finale, l'outillage de forme comportant :
• une première matrice (42) pour former une (32) ailette latérale de ladite pièce métallique préformée dans sa forme finale,
• un insert central mobile (44) sur laquelle est mise en place ladite pièce métallique préformée, ladite pièce métallique préformée étant en outre bloquée dans ladite enceinte dudit outillage de forme,
• une seconde matrice (46) pour former une autre (34) ailette latérale de ladite pièce métallique préformée dans sa forme finale,
ledit insert central mobile comportant au moins deux zones de tronçonnage (50, 52) pour supprimer lesdites contre-dépouilles angulaires de vrillage et ainsi permettre un déchaussement de ladite pièce métallique préformée en forme finale selon une direction d'extraction unique.

7. Outillage de forme selon la revendication 6, **caractérisé en ce que** ledit insert central mobile comporte deux parties tronquées (50, 52) à ses deux extrémités.

8. Outillage de forme selon la revendication 6, **caractérisé en ce que** ladite première matrice est une matrice inférieure fixe et ladite seconde matrice est une matrice supérieure mobile.

## Patentansprüche

1. Schmiedeverfahren, das ein Formwerkzeug verwendet, welches für das Hochtemperaturschmieden eines vorgeformten Metallteils (30) geeignet ist, das in seiner endgültigen Form winkelige Verwindungshinterschneidungen (49) aufweist, wobei das Verfahren die folgenden Schritte umfasst:
- Anordnen des vorgeformten Metallteils an einem beweglichen mittleren Einsatz (44) des Werkzeugs, der wenigstens zwei Abtrennbereiche zum Beseitigen der winkeligen Verwindungshinterschneidungen umfasst,
- Festlegen des vorgeformten Metallteils in dem Werkzeug,
- Gestaltung von seitlichen Flügeln (32, 34) des vorgeformten Metallteils in seiner endgültigen Form durch das Relativbewegen, in einer gemeinsamen Richtung (48A), eines ersten Gesenks (46) und des beweglichen mittleren Einsatzes zu einem zweiten Gesenk (42) hin,
- Freilegen des vorgeformten Metallteils in endgültiger Form in einer einzigen Herausziehrichtung.

2. Schmiedeverfahren nach Anspruch 1, **dadurch gekennzeichnet, dass** die wenigstens zwei Abtrennbereiche zwei abgestumpfte Teile (50, 52) umfassen, die an zwei Enden des beweglichen mittleren Einsatzes ausgebildet sind.

3. Schmiedeverfahren nach Anspruch 1, **dadurch gekennzeichnet, dass** das Bewegen des beweglichen mittleren Einsatzes durch das Bewegen des ersten Gesenks geführt wird.

4. Schmiedeverfahren nach Anspruch 1, **dadurch gekennzeichnet, dass** die einzige Herausziehrichtung zu der gemeinsamen Bewegungsrichtung senkrecht verläuft.

5. Schmiedeverfahren nach Anspruch 1, **dadurch gekennzeichnet, dass** das vorgeformte Metallteil an jedem seiner beiden Enden einen Zapfen (38A, 38B) aufweist und das Festlegen des vorgeformten Metallteils in dem Werkzeug durch Einfügen von einem der beiden Zapfen und durch Verschwenken des anderen der beiden Zapfen erreicht wird.

6. Formwerkzeug, geeignet für das Hochtemperaturschmieden eines vorgeformten Metallteils (30), das in seiner endgültigen Form winkelige Verwindungshinterschneidungen (49) aufweist, in einem Gehäuse (40), wobei das Formwerkzeug umfasst:
• ein erstes Gesenk (42) zum Formen eines (32) seitlichen Flügels des vorgeformten Metallteils in seiner endgültigen Form,
• einen beweglichen mittleren Einsatz (44), an dem das vorgeformte Metallteil angeordnet wird, wobei das vorgeformte Metallteil ferner in dem Gehäuse des Formwerkzeugs festgelegt wird,
• ein zweites Gesenk (46) zum Formen eines weiteren (34) seitlichen Flügels des vorgeformten Metallteils in seiner endgültigen Form,
wobei der bewegliche mittlere Einsatz wenigstens zwei Abtrennbereiche (50, 52) umfasst, um die winkeligen Verwindungshinterschneidungen zu entfernen und um somit ein Freilegen des vorgeformten Metallteils in endgültiger Form in einer einzigen Herausziehrichtung zu ermöglichen.

7. Formwerkzeug nach Anspruch 6, **dadurch gekennzeichnet, dass** der bewegliche mittlere Einsatz zwei abgestumpfte Teile (50, 52) an seinen beiden Enden umfasst.

8. Formwerkzeug nach Anspruch 6, **dadurch gekennzeichnet, dass** das erste Gesenk ein festes Untergesenk und das zweite Gesenk ein bewegliches Obergesenk ist.

## Claims

1. A forging method using shaping tooling suitable for high temperature forging of a preformed metal part (30) having angular twist undercuts (49) in its final shape, the method comprising the following steps:
- placing said preformed metal part on a movable central insert (44) of said tooling, the insert including at least two cutaway zones in order to eliminate said angular twist undercuts;
- blocking said preformed metal part in said tooling;
- shaping side fins (32, 34) of said preformed metal part into its final shape by causing a first die (46) and said movable central insert to perform relative movement along a common direction (48A) towards a second die (42); and
- dislodging said preformed metal part in its final shape in a single extraction direction.

2. A forging method according to claim 1, **characterized in that** said at least two cutaway zones comprise two truncated portions (50, 52) made at two ends of said movable central insert.

3. A forging method according to claim 1, **characterized in that** the movement of said movable central insert is guided by the movement of said first die.

4. A forging method according to claim 1, **characterized in that** said single extraction direction is perpendicular to said common direction for movement.

5. A forging method according to claim 1, **characterized in that** said preformed metal part includes a stud (38A, 38B) at each of its two ends, and said preformed metal part is blocked in said tooling by embedding one of said two studs and by pivoting the other one of said two studs.

6. Shaping tooling suitable for high temperature forging in an enclosure (40) of a preformed metal part (30) having angular twist undercuts (49) in its final shape, the shaping tooling comprising:
- a first die (42) suitable for forming one side fin (32) of said preformed metal part in its final shape;
- a movable central insert (44) on which said preformed metal part is placed, said preformed metal part also being blocked in said enclosure of said shaping tooling; and
- a second die (46) for forming another side fin (34) of said preformed metal part in its final shape;
said movable central insert including at least two cutaway zones (50, 52) for eliminating said angular twist undercuts and thus enabling said preformed metal part in its final shape to be dislodged in a single extraction direction.

7. Shaping tooling according to claim 6, **characterized in that** said movable central insert has two truncated portions (50, 52) at its two ends.

8. Shaping tooling according to claim 6, **characterized in that** said first die is a stationary bottom die and said second die is a movable top die.
